# EUROPEAN PATENT APPLICATION

(11) **EP 4 622 248 A1**
(43) Date of publication of application: **24.09.2025**
(21) Application number: 25162684.2
(22) Date of filing: 10.03.2025
(51) Int. Cl.: H04N 7/15, G06T 11/00, G06T 13/40, G06V 10/82, G06V 40/16

(54) **VIRTUAL REALITY USER IMAGE GENERATION**

(30) Priority: 17.03.2024 US 202463566353 P; 14.11.2024 US 202418948198
(71) Applicant: CMS Cameron McKenna Nabarro Olswang LLP, London EC4N 6AF (GB)
(72) Inventor: LUNDELL, BENJAMIN ELIOT, Redmond, 98052 (US); HEWITT, CHARLES THOMAS, Redmond, 98052 (US); ELLISON-TAYLOR, IAN M., Redmond, 98052 (US); ELLIOTT HADNETT-HUNTER, JACOB MARTIN, Redmond, 98052 (US)
(74) Representative: CMS Cameron McKenna Nabarro Olswang LLP

(57) **Abstract**

Images are generated and rendered on a first device having a two-dimensional display. The first device receives from a second device expression data indicative of a current facial expression of a user of the second device, where the second device has a three-dimensional display. The expression data is input to a generative model trained on an enrollment image indicative of a baseline image of the user's face. Facial image information is received from the generative model that is usable to render a two-dimensional image of the current facial expression on the first device. The facial image information is sent to the first device for rendering of the two-dimensional image of the current facial expression on the two-dimensional display in context of an on-going session of a communications system.

## Description

### PRIORITY APPLICATION

This application claims the benefit of and priority to U.S. Provisional Application No. 63/566,353, filed March 17, 2024, the entire contents of which are incorporated herein by reference.

### BACKGROUND

Virtual reality ("VR") devices enable users to view, explore, and interact with virtual environments. Augmented reality ("AR") devices enable users to view and interact with virtual objects while simultaneously viewing the physical world around them. For example, an AR device might enable a user to view the placement of virtual furniture in a real-world room. Various devices that enable either or both VR and AR and related types of experiences might be referred to generally as extended reality ("XR") devices. VR devices, AR devices, and XR devices may also be referred to as a near-eye device ("NED") or head-mounted device (HMD).

It is with respect to these considerations and others that the disclosure made herein is presented.

### SUMMARY

A user who is using a virtual reality device may wish to communicate over a video conferencing system (e.g. MS TEAMS) with other users. If the user is only using the virtual reality device, it is likely that the user will not have a separate webcam available for the communication session. However, even if the user has a separate webcam, it is unlikely that the user would want to appear on a video call wearing their virtual reality device.

Existing solutions to address this issue include either the use of "cartoon avatars" or "photorealistic avatars" that are animated using a full 3D animation pipeline. This animation pipeline is typically run by the communications system, and so the avatar used can vary between communications systems such as TEAMS and ZOOM, for example.

The present disclosure describes a software-based way to "hallucinate" or otherwise generate and inject/modify images in a video stream that is suitable for the video call and that includes a rendering of the user without wearing the VR headset. In an embodiment, the disclosure includes expression tracking and expression rendering. The video stream is generated without the use of full 3D animation and is consumable by a plurality of applications.

Images are generated and rendered on a first device having a two-dimensional display. The first device receives from a second device expression data indicative of a current facial expression of a user of the second device, where the second device has a three-dimensional display. The expression data is input to a generative model trained on an enrollment image indicative of a baseline image of the user's face. Facial image information is received from the generative model that is usable to render a two-dimensional image of the current facial expression on the first device. The facial image information is sent to the first device for rendering of the two-dimensional image of the current facial expression on the two-dimensional display in context of an on-going session of a communications system. This Summary is not intended to limit the scope of the claimed subject matter. Furthermore, the claimed subject matter is not limited to implementations that solve any or all disadvantages noted in any part of this disclosure.

### DETAILED DESCRIPTION OF DRAWINGS

The Detailed Description is described with reference to the accompanying FIGS. In the FIGS., the left-most digit(s) of a reference number identifies the FIG. in which the reference number first appears. The same reference numbers in different FIGS. indicate similar or identical items.
FIG. 1 is a diagram illustrating the disclosed techniques according to one embodiment disclosed herein.
FIGs. 2A through 2G are diagrams illustrating the disclosed techniques according to one embodiment disclosed herein.
FIG. 3 is a diagram showing aspects of an example system according to one embodiment disclosed herein.
FIG. 4 is a diagram showing aspects of an example system according to one embodiment disclosed herein.
FIG. 5 is a flow diagram showing aspects of an illustrative routine, according to one embodiment disclosed herein.
FIG. 6 is a computer architecture diagram illustrating aspects of an example computer architecture for a computer capable of executing the software components described herein.
FIG. 7 is a data architecture diagram showing an illustrative example of a computer environment.

### DETAILED DESCRIPTION

Referring to the appended drawings, in which like numerals represent like elements throughout the several FIGURES, aspects of various technologies for video super resolution using motion vectors will be described. In the following detailed description, references are made to the accompanying drawings that form a part hereof, and which are shown by way of illustration specific configurations or examples.

A user who is using a virtual reality headset may wish to communicate over a video conferencing system (e.g. MS TEAMS) with other users. As used herein, any kind of virtual reality headset may be referred to more broadly as a visor. For example, a user may be wearing a virtual reality headset that is connected to a remote computing instance which is hosted in the cloud. In such situations, it is likely that the user will not have a webcam available for the call. In another example, the user may be able to access a virtual web cam. In other scenarios, the user may be using a mix of virtual and physical devices. For example, the user, while wearing the headset, may also be using a physical computing device with a webcam. In either scenario, it is unlikely that the user will want to appear on a video call wearing their virtual reality headset.

Existing solutions to address this issue can include either using "cartoon avatars" (e.g., drawn by artists) or "photorealistic avatars" (e.g., produced from data) that are then animated using a full 3D animation pipeline. This animation pipeline is typically run by the communication application, and so the avatar used can vary between communications systems such as TEAMS and ZOOM, for example.

The present disclosure describes a software-based way to "hallucinate" a video stream that is suitable for the video communication session and provides a full rendering of the user. In some embodiments the video stream can be generated without the use of a full 3D animation pipeline. In various embodiments, video frames are rendered directly, and the output is a video stream which is consumable by any application that is capable of receiving and rendering the video stream.

In an embodiment, the disclosed embodiments include expression tracking, where the expression on the headset-wearer's face is determined through tracking of various data. Expression tracking can be performed using direct sensor processing (e.g., using the microphone or webcam feeds (if available)) or indirectly by calling an API provided by the VR headset itself (e.g., a face tracking API).

In an embodiment, expression rendering is performed using a precomputed enrollment by the user. The precomputed enrollment can include an image of the user's face that has previously been captured and provided as a basis for further transformation using the techniques described herein. The user's face can then be rendered with the computed expression from the expression tracking. Methods for rendering can employ a deep generative model (e.g. stable diffusion), neural rendering (e.g. Neural Radiance Fields (NeRFs)), or any other method which allows a photorealistic image of the user's face to be generated.

In an embodiment, a virtual webcam can be implemented, where the output of the rendering pipeline is fed into a "virtual webcam" which can be accessed by the video conferencing software (e.g. TEAMS, ZOOM) without requiring knowledge of how the video stream was generated.

Tracking signals for the user's facial expression can be provided in a number of ways. For example, the headset may include cameras and other sensors for tracking the user's face. The tracking signals can be used to track changes to the user's face for subsequent interpretation and rendering, using techniques such as landmark detection to detect a person's head position, rotation, and expression. When an external webcam is available, facial tracking can be performed using data captured by the webcam. Signals can be merged if both a webcam and headset are available. As discussed further herein, these signals can be used to reconstruct the image of the user's face without showing the user's VR headset.

In an embodiment, an enrollment sequence or image can be used that is captured prior to the session. The enrollment sequence or image can comprise an image of the person not wearing any headset and can be the basis for generating live video images of the user with different expressions. The generated images can have, for example, different head poses and facial expressions and variations in the environment, but the generated images maintain the user's identity and static aspects of the user's environment. When an external webcam is available, a live modification of image frames can be performed to remove the headset and other objects of interest.

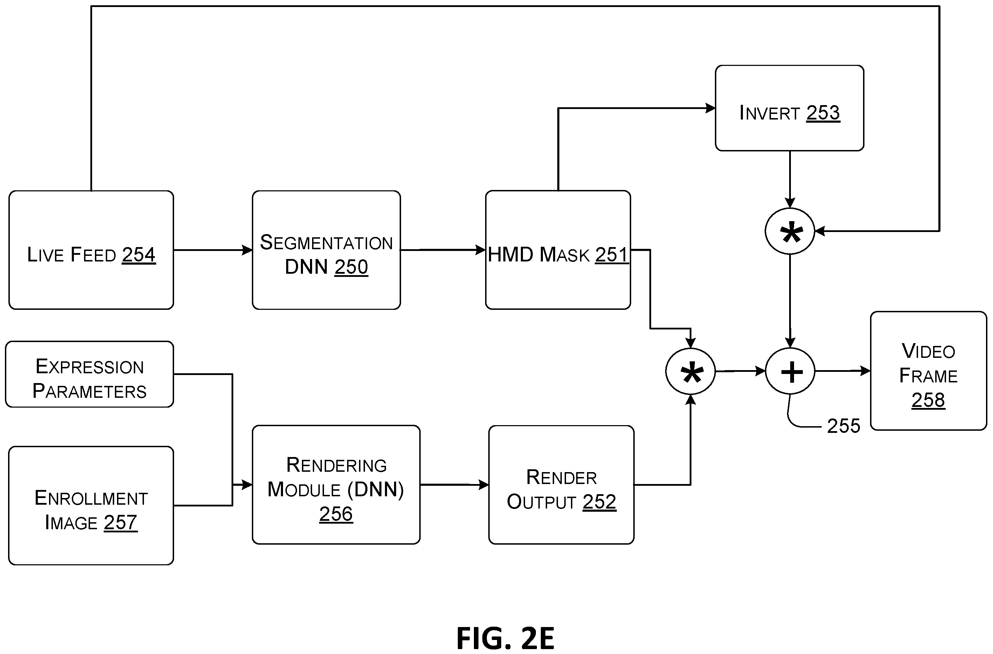

In the case where an external observer webcam is not available, then the video frame can be generated based on the enrollment image and expression parameters for each frame. If an external observer webcam is available, a masking operation can be performed, for example as illustrated in FIG. 2E. A full image can be generated from the enrollment. This can be performed using the same rendering module as in the case where the external observer webcam is not available. The full image can be multiplied by the mask from the live feed and composite.

In the example shown in FIG. 2E, the segmentation DNN 250 can be a neural network that takes a frame from the video. In one implementation, the HMD mask 251 can be implemented with bits such that each pixel value is a one or a zero. The HMD mask 251 is used to select only the portion of the rendered output 252 that corresponds to where the HMD is located in the input image. In an embodiment, the inverse 253 of the mask can be removed from the live feed 254 before being added 255 to the HMD mask portion of the rendered output. Thus the final image (e.g., video frame 258) is a combination of the original live feed frame with hallucinated pixels replacing the portion where the headset was located in the original live feed. In some embodiments, additional processing can be performed to smooth out edges and other disparities/discontinuities that can appear due to the HMD masked portion being added to the live feed. Additionally, the rendering module 256 may take the enrollment image 257 and output an entire frame.

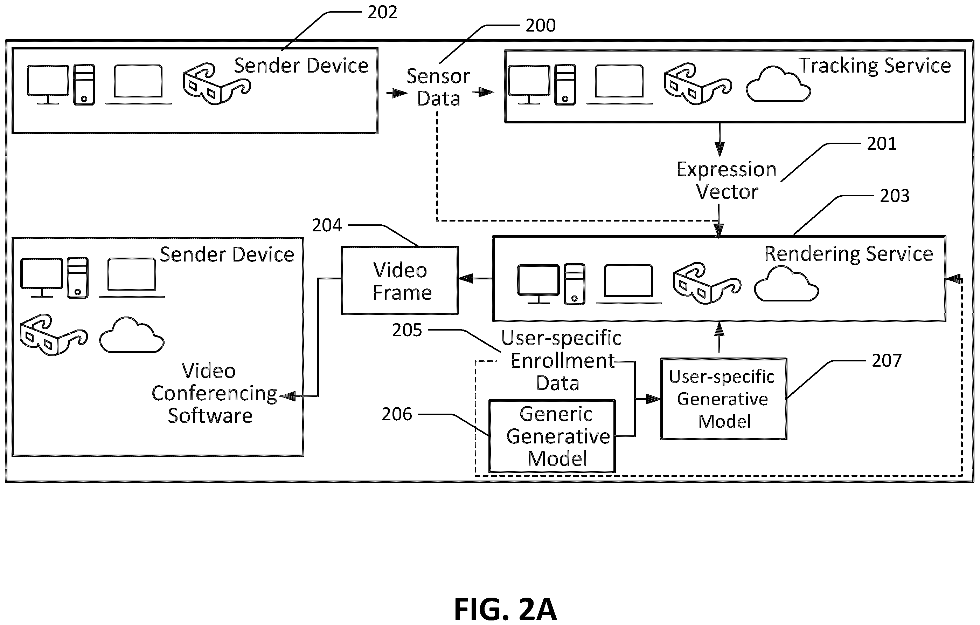

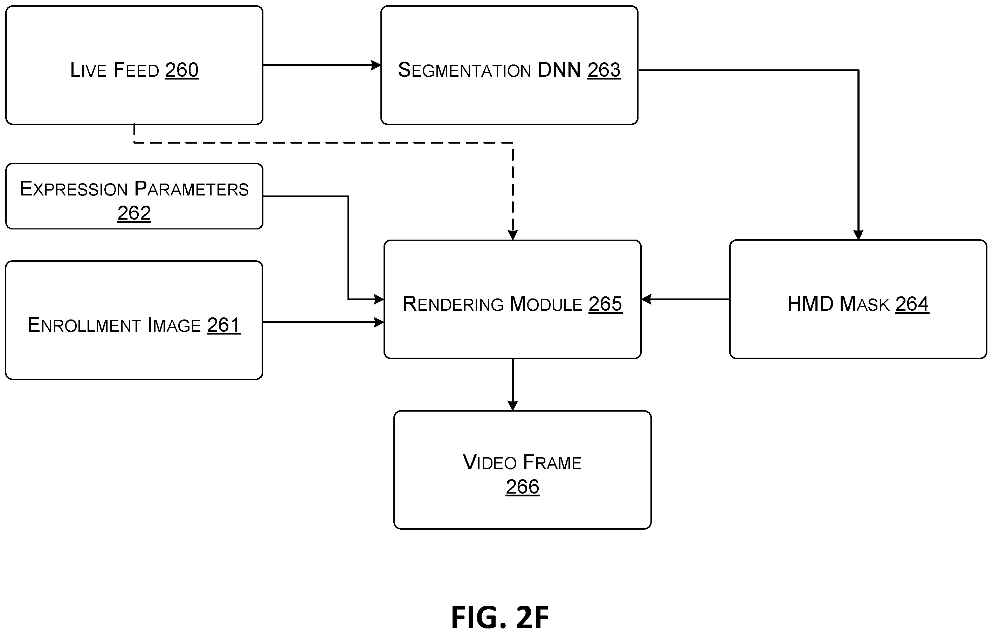

In another embodiment, and as illustrated in the example shown in FIG. 2F, a specialist rendering module can be trained for the case in which the mask is used as input to directly generate the composited output (e.g., video frame 266). For example, inputs such as the live feed frame 260, enrollment frame 261, the HMD mask, and expression parameters 262 can be input to the rendering service. As shown in this example, the live feed 260 can be run through the segmentation DNN 263 and masked 264, and optionally or additionally can also be fed directly to the rendering module 265. The rendering service can generate the pixels directly without some or all of the processing steps of FIG 2F. The rendering service can be trained to use the live feed 260 and expression parameters 262 and render only the pixels that are needed. This allows for greater efficiency as hallucination can be performed with fewer pixels.

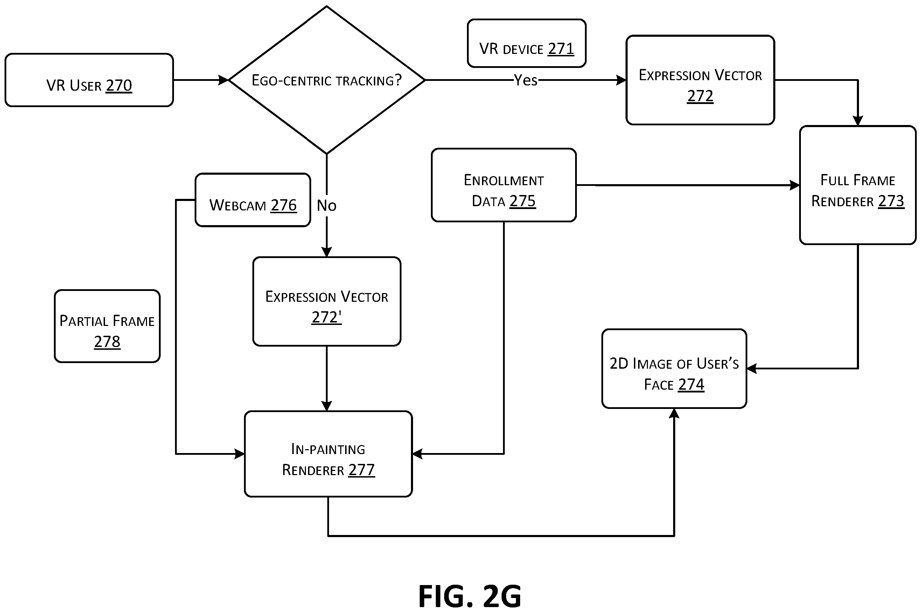

FIG. 2G illustrates rendering and displaying of images in accordance with the disclosure. In one embodiment, if the VR user 270 is using a device with ego-centric tracking, then the VR device 271 provides expression vector 272 to the full frame renderer 273 which generates the 2D image 274 of the user's face using enrollment data 275.

In a further embodiment, if the VR user 270 is not using a device with ego-centric tracking, then a device such as webcam 276 provides expression vector 272' and partial frame 278 to in-painting renderer 277, which generates the 2D image 274 of the user's face using enrollment data 275.

The disclosed embodiments enable technical benefits in that other systems and techniques typically generate and track user movements in 3D which is computationally expensive. The present embodiments enable rendering within a 2D framework and processing pixels entirely in 2D without going through a 3D pipeline. The tracking signal can be generated in 3D or 2D. From that tracking signal, only the 2D image generation or modification is needed and a 2D feed can be rendered in the communications session without placing the user into a 3D scene. By avoiding full 3D modeling, rendering can be performed more efficiently without the need for full GPU-type processing resources.

Another technical benefit of the disclosed techniques is that the processing of the image data can be allocated to computing resources in an efficient manner. For example, it would be computationally expensive to generate frames on the user device and then transport the generated images through the communications system. It would be more efficient to perform tracking of the user's features on the device. The expression vector, which can be expressed with a smaller amount of information per frame as noted above, can be transported to computing resources in the cloud for generation of the image data based on the expression vector. As another example, the expression vector can be transported to the client devices for rendering. Since the expression vector does not consume significant amounts of data, the transport of expression data to the cloud or client devices can be performed without significant bandwidth.

In an embodiment, a generative model such as a diffusion model can be used to generate images. In one embodiment, the tracking signals can be used to represent the tracked facial image as an expression vector and input to the model. Such a representation can be relatively small in size depending on the amount of fidelity that is desired, and can thus be performed with reduced bandwidth, latency, and processing requirements. Furthermore, if only the visor is to be excluded in the output image, then it is not necessary to generate the image of the user's entire face. Only a subset of the user's face to fill in space that was previously filled by the visor need be generated.

In some embodiments, the generative model can be tailored to specific users. For example, a generic baseline model can be trained on a wide population, and the weights can be fine-tuned based on the characteristics of the user's face based on the enrollment video. In an embodiment, a model is uniquely run for each user. While each model can have the same architecture, number of weights, and so forth, the actual value of the parameters can be uniquely tuned to each user.

In one example implementation, if an external webcam is available, a segmentation model can be run for each frame to generate a mask of the visor in that frame. In some embodiments, a segmentation model can be implemented that produces a mask of any selected image feature. Thus, not only can the user's visor be replaced, but other features of interest can be replaced as well.

In various embodiments, the expression parameters can be determined from various inputs such as cameras, tracking devices, and other sensors. In some embodiments, audio input can be used to determine facial expressions.

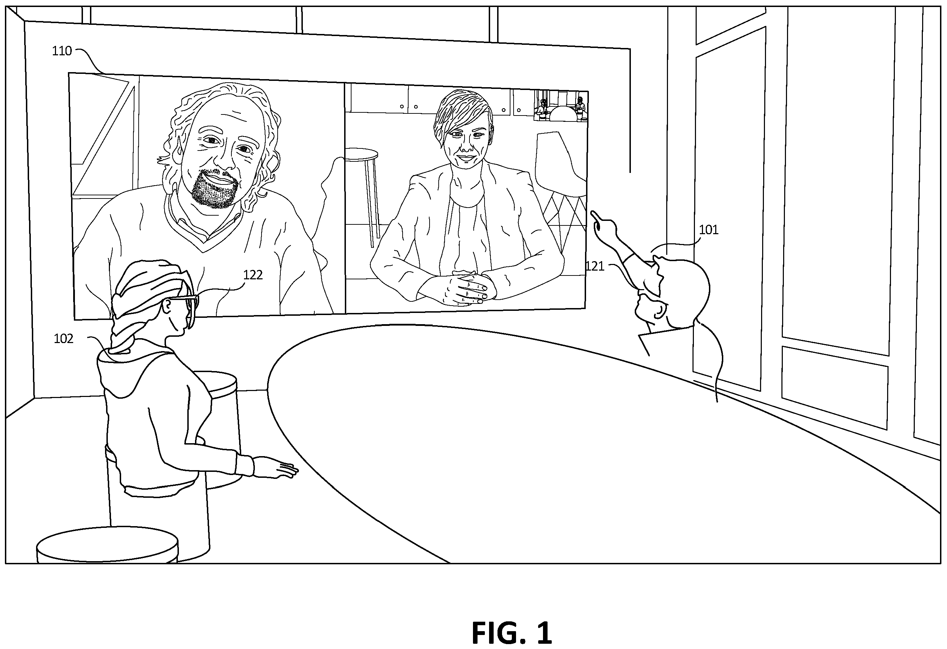

FIG. 1 illustrates an example environment in which the disclosed embodiments can be implemented. Users 101 and 102 are each wearing VR headsets 121 and 122, and are interacting with an external physical display 110. Each user may also have images rendered on their respective VR headsets. FIG. 2A illustrates a functional diagram showing some of the disclosed techniques. In particular, FIG. 2A illustrates implementations that transform one or more sensor data streams 200 from a sender device 202 into a single vector 201 that encodes the user's expression. The expression vector 201 can be provided to a rendering service 203 that may output video frame 204. User-specific enrollment data 205 can used with a generic generative model 206 to generate a user-specific generative model 207, which can be used by rendering service 203. Depending on the specific environment, one or more of the illustrated methods can be combined to improve accuracy. These methods can run directly on a user's device, at a cloud service, or some combination of the two. In some embodiments, the dashed lines show optional flows. As shown in FIG. 2A, in some implementations the dashed lines indicate optional flows. The devices/functions shown can be co-hosted / co-located on the same hardware platform or can be implemented as separate devices/functions.

For face tracking from an external webcam, various tracking solutions can be implemented, particularly for generating model parameters from an image. The underlying model of the face can be shared across various stages of the processing pipeline.

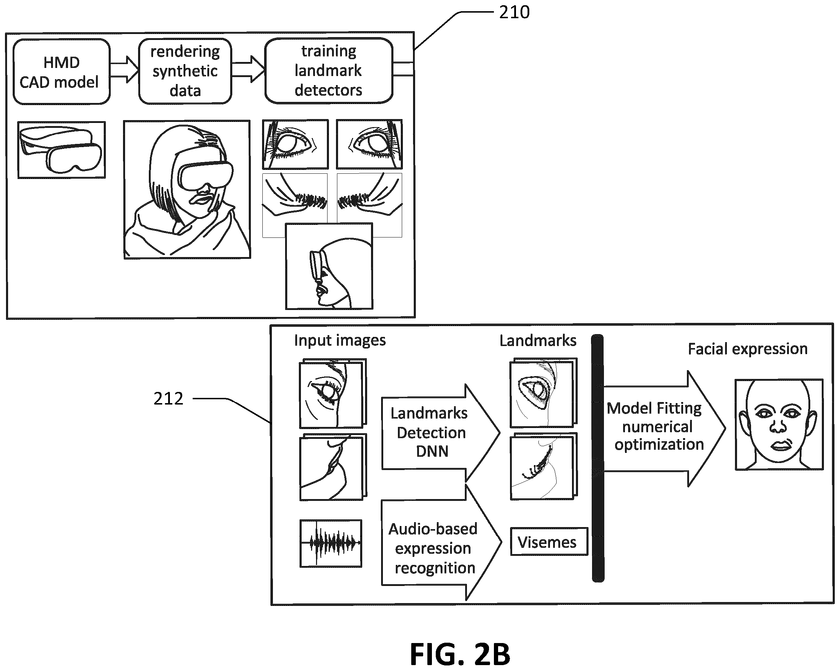

With reference to FIG. 2B, methods for 3D face reconstruction with dense landmarks, and methods for face analysis in the wild using synthetic data alone, are described in documentation found within Github (microsoft.github.io), the contents of which are incorporated herein by reference. FIG. 2B illustrates rendering synthetic data using a HMD CAD model and training landmark detectors 210, and generating a facial expression using model fitting based on detected landmarks and visemes 212.

In some embodiments, face tracking data from a head mounted device can be mapped (e.g. for Meta: Face Tracking for Movement SDK for Unity: Unity | Oculus Developers), the contents of which are incorporated herein by reference. The face tracking data can be from device camera feeds.

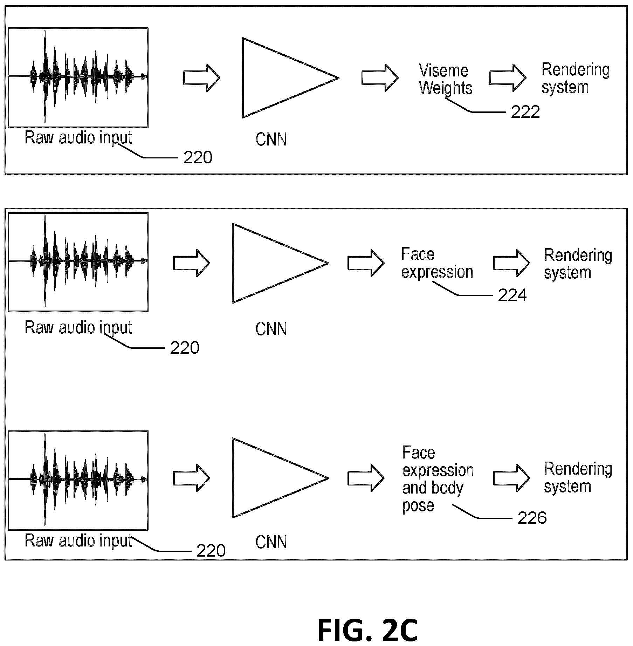

With reference to FIG. 2C, in some embodiments, audio data 220 can be added to the expression signal. In one embodiment, techniques for generating facial expressions 224 from audio signals can be implemented, where a small DNN is used to take an audio signal and predict viseme activations 222 (e.g., lip motion for lip synchronization). In an embodiment, Text-To-Speech (TTS) can be used, for example as described in "Azure AI Speech Announces Public Preview of Text to Speech Avatar" at techcommunity.microsoft.com, the contents of which are incorporated herein by reference. In an embodiment, the entire face can be generated rather than just visemes. Additionally, audio data can be used for body/hand pose estimation 226.

In some embodiments, implementations of rendering services are described. The example implementations include those that can be used to take in an expression vector, sensor and/or enrollment data, and a user-specific model to create a "visor removed" video frame. The example implementations can be run on the user device, in the cloud, or a combination of the two.

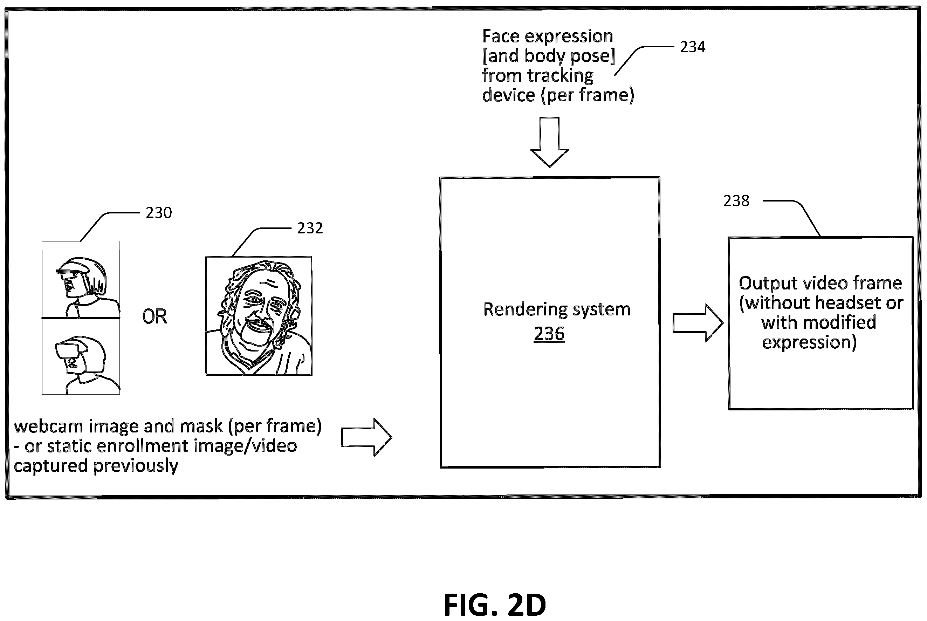

With reference to FIG. 2D, in some embodiments, implementations of HMD tracking/segmentation are described. For an external webcam scenario, HMD data can be used to track or segment with DNN, which can be trained on synthetic data. This technique can be used to generate a mask for visor replacement. For example, webcam image and mask 230 or enrollment image/video 232 is provided to rendering system 236, which is also provided with face expression / body pose data from the tracking device 234, and generates output video 238 without a headset or with a modified expression.

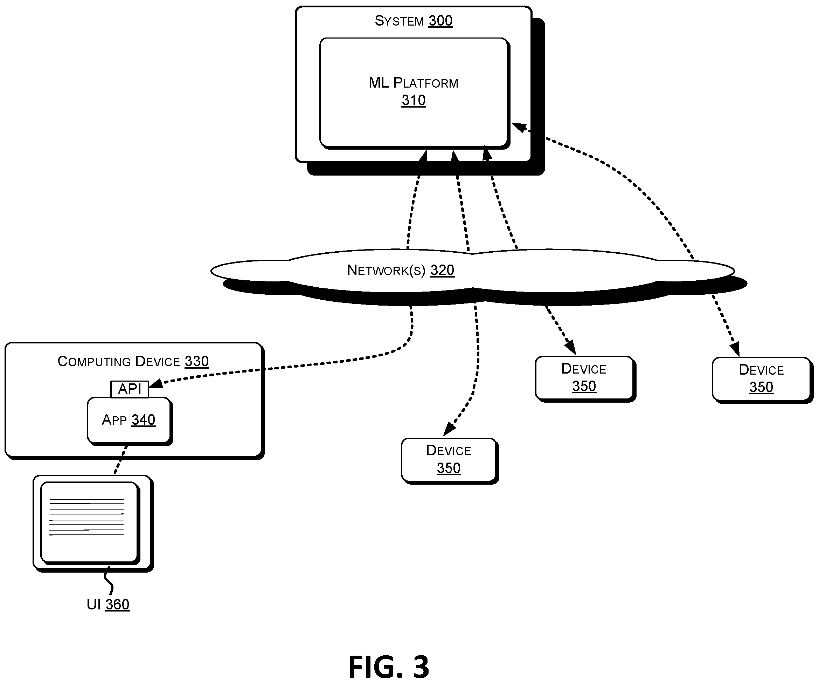

In various embodiments, the machine learning model(s) may be run locally on the client. In other embodiments, the machine learning inferencing can be performed on a server of a network. For example, in the system illustrated in FIG. 3, a system 300 is illustrated that implements ML platform 310. The ML platform 310 may be configured to provide output data to various devices 350 over a network 320, as well as computing device 330. A user interface 360 may be rendered on computing device 330. The user interface 360 may be provided in conjunction with an application 340 that communicates to the ML platform 330 using an API via network 320. In some embodiments, system 300 may be configured to provide product information to users. In one example, ML platform 310 may implement a machine learning system to perform one or more tasks. The ML platform 310 utilizes the machine learning system to perform tasks such as image and writing recognition. The machine learning system may be configured to be optimized using the techniques described herein.

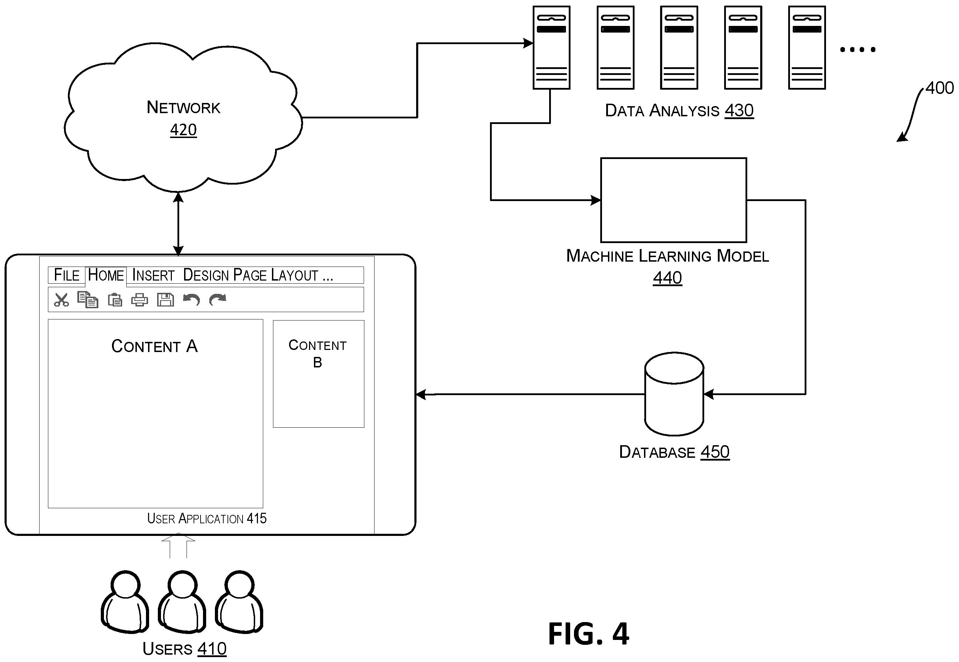

FIG. 4 is a computing system architecture diagram showing an overview of a system disclosed herein for implementing a machine learning model, according to one embodiment disclosed herein. As shown in FIG. 4, a machine learning system 400 may be configured to perform analysis and perform identification, prediction, or other functions based upon various data collected by and processed by data analysis components 430 (which might be referred to individually as an "data analysis component 430" or collectively as the "data analysis components 430"). The data analysis components 430 may, for example, include, but are not limited to, physical computing devices such as server computers or other types of hosts, associated hardware components (e.g., memory and mass storage devices), and networking components (e.g., routers, switches, and cables). The data analysis components 430 can also include software, such as operating systems, applications, and containers, network services, virtual components, such as virtual disks, virtual networks, and virtual machines. Database 450 can include data, such as a database, or a database shard (i.e., a partition of a database). Feedback may be used to further update various parameters that are used by machine learning model 420. Data may be provided to the user application 415 to provide results to various users 410 using a user application 415. In some configurations, machine learning model 420 may be configured to utilize supervised and/or unsupervised machine learning technologies. A model compression framework based on sparsity-inducing regularization optimization as disclosed herein can reduce the amount of data that needs to be processed in such systems and applications. Effective model compression when processing iterations over large amounts of data may provide improved latencies for a number of applications that use such technologies, such as image and sound recognition, recommendation systems, and image analysis.

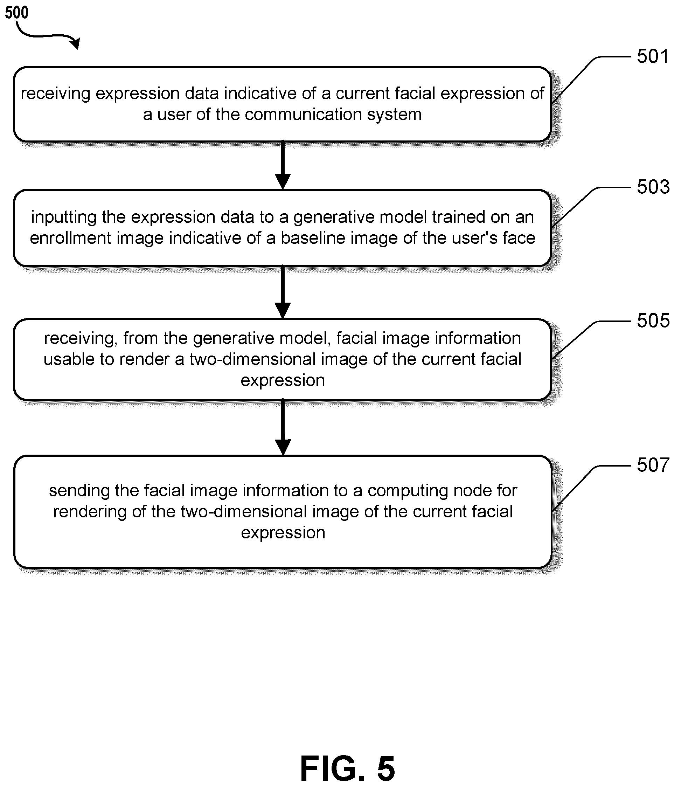

Turning now to FIG. 5, illustrated is an example operational procedure for generating images in accordance with the present disclosure. The operational procedure may be implemented in a system comprising one or more computing devices.

It should be understood by those of ordinary skill in the art that the operations of the methods disclosed herein are not necessarily presented in any particular order and that performance of some or all of the operations in an alternative order(s) is possible and is contemplated. The operations have been presented in the demonstrated order for ease of description and illustration. Operations may be added, omitted, performed together, and/or performed simultaneously, without departing from the scope of the appended claims.

It should also be understood that the illustrated methods can end at any time and need not be performed in their entireties. Some or all operations of the methods, and/or substantially equivalent operations, can be performed by execution of computer-readable instructions included on a computer-storage media, as defined herein. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like. Although the example routine described below is operating on a computing device, it can be appreciated that this routine can be performed on any computing system which may include a number of computers working in concert to perform the operations disclosed herein.

Thus, it should be appreciated that the logical operations described herein are implemented (1) as a sequence of computer implemented acts or program modules running on a computing system such as those described herein and/or (2) as interconnected machine logic circuits or circuit modules within the computing system. The implementation is a matter of choice dependent on the performance and other requirements of the computing system. Accordingly, the logical operations may be implemented in software, in firmware, in special purpose digital logic, and any combination thereof.

Referring to FIG. 5, operation 501 illustrates receiving, by the first device from a second device, expression data indicative of a current facial expression of a user of the second device, the second device having a three-dimensional display.

Operation 503 illustrates inputting the expression data to a generative model trained on an enrollment image indicative of a baseline image of the user's face.

Operation 505 illustrates receiving, from the generative model, facial image information usable to render a two-dimensional image of the current facial expression on the first device.

Operation 505 illustrates sending the facial image information to the first device for rendering the two-dimensional image of the current facial expression on the two-dimensional display in context of an on-going session of the communications system.

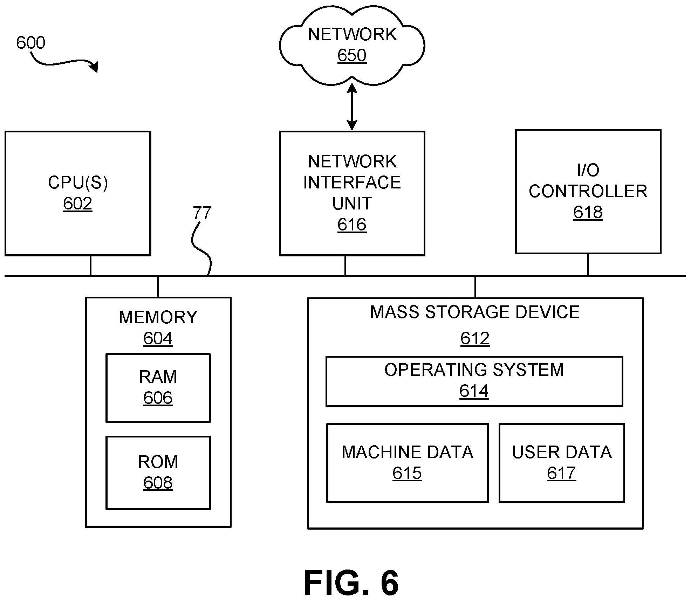

FIG. 6 shows an example computer architecture for a computer capable of providing the functionality described herein such as, for example, a computing device configured to implement the functionality described above with reference to FIGS. 1-6. Thus, the computer architecture 600 illustrated in FIG. 6 illustrates an architecture for a server computer or another type of computing device suitable for implementing the functionality described herein. The computer architecture 600 might be utilized to execute the various software components presented herein to implement the disclosed technologies.

The computer architecture 600 illustrated in FIG. 6 includes a central processing unit 602 ("CPU"), a system memory 604, including a random-access memory 606 ("RAM") and a read-only memory ("ROM") 608, and a system bus 77 that couples the memory 604 to the CPU 602. A firmware containing basic routines that help to transfer information between elements within the computer architecture 600, such as during startup, is stored in the ROM 608. The computer architecture 600 further includes a mass storage device 612 for storing an operating system 614, other data, such as product data 615 or user data 617.

The mass storage device 612 is connected to the CPU 602 through a mass storage controller (not shown) connected to the bus 77. The mass storage device 612 and its associated computer-readable media provide non-volatile storage for the computer architecture 600. Although the description of computer-readable media contained herein refers to a mass storage device, such as a solid-state drive, a hard disk or optical drive, it should be appreciated by those skilled in the art that computer-readable media can be any available computer storage media or communication media that can be accessed by the computer architecture 600.

Communication media includes computer readable instructions, data structures, program modules, or other data in a modulated data signal such as a carrier wave or other transport mechanism and includes any delivery media. The term "modulated data signal" means a signal that has one or more of its characteristics changed or set in a manner as to encode information in the signal. By way of example, and not limitation, communication media includes wired media such as a wired network or direct-wired connection, and wireless media such as acoustic, radio frequency, infrared and other wireless media. Combinations of the any of the above should also be included within the scope of computer-readable media.

By way of example, and not limitation, computer-readable storage media might include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer architecture 600. For purposes of the claims, the phrase "computer storage medium," "computer-readable storage medium" and variations thereof, does not include waves, signals, and/or other transitory and/or intangible communication media, per se.

According to various implementations, the computer architecture 600 might operate in a networked environment using logical connections to remote computers through a network 650 and/or another network (not shown). A computing device implementing the computer architecture 600 might connect to the network 650 through a network interface unit 616 connected to the bus 77. It should be appreciated that the network interface unit 616 might also be utilized to connect to other types of networks and remote computer systems.

The computer architecture 600 might also include an input/output controller 618 for receiving and processing input from a number of other devices, including a keyboard, mouse, or electronic stylus (not shown in FIG. 6). Similarly, the input/output controller 618 might provide output to a display screen, a printer, or other type of output device (also not shown in FIG. 6).

It should be appreciated that the software components described herein might, when loaded into the CPU 602 and executed, transform the CPU 602 and the overall computer architecture 600 from a general-purpose computing system into a special-purpose computing system customized to facilitate the functionality presented herein. The CPU 602 might be constructed from any number of transistors or other discrete circuit elements, which might individually or collectively assume any number of states. More specifically, the CPU 602 might operate as a finite-state machine, in response to executable instructions contained within the software modules disclosed herein. These computer-executable instructions might transform the CPU 602 by specifying how the CPU 602 transitions between states, thereby transforming the transistors or other discrete hardware elements constituting the CPU 602.

Encoding the software modules presented herein might also transform the physical structure of the computer-readable media presented herein. The specific transformation of physical structure might depend on various factors, in different implementations of this description. Examples of such factors might include, but are not limited to, the technology used to implement the computer-readable media, whether the computer-readable media is characterized as primary or secondary storage, and the like. If the computer-readable media is implemented as semiconductor-based memory, the software disclosed herein might be encoded on the computer-readable media by transforming the physical state of the semiconductor memory. For example, the software might transform the state of transistors, capacitors, or other discrete circuit elements constituting the semiconductor memory. The software might also transform the physical state of such components in order to store data thereupon.

As another example, the computer-readable media disclosed herein might be implemented using magnetic or optical technology. In such implementations, the software presented herein might transform the physical state of magnetic or optical media, when the software is encoded therein. These transformations might include altering the magnetic characteristics of locations within given magnetic media. These transformations might also include altering the physical features or characteristics of locations within given optical media, to change the optical characteristics of those locations. Other transformations of physical media are possible without departing from the scope and spirit of the present description, with the foregoing examples provided only to facilitate this discussion.

In light of the above, it should be appreciated that many types of physical transformations take place in the computer architecture 600 in order to store and execute the software components presented herein. It also should be appreciated that the computer architecture 600 might include other types of computing devices, including hand-held computers, embedded computer systems, personal digital assistants, and other types of computing devices known to those skilled in the art.

It is also contemplated that the computer architecture 600 might not include all of the components shown in FIG. 6, might include other components that are not explicitly shown in FIG. 6, or might utilize an architecture completely different than that shown in FIG. 6. For example, and without limitation, the technologies disclosed herein can be utilized with multiple CPUS for improved performance through parallelization, graphics processing units ("GPUs") for faster computation, and/or tensor processing units ("TPUs"). The term "processor" as used herein encompasses CPUs, GPUs, TPUs, and other types of processors.

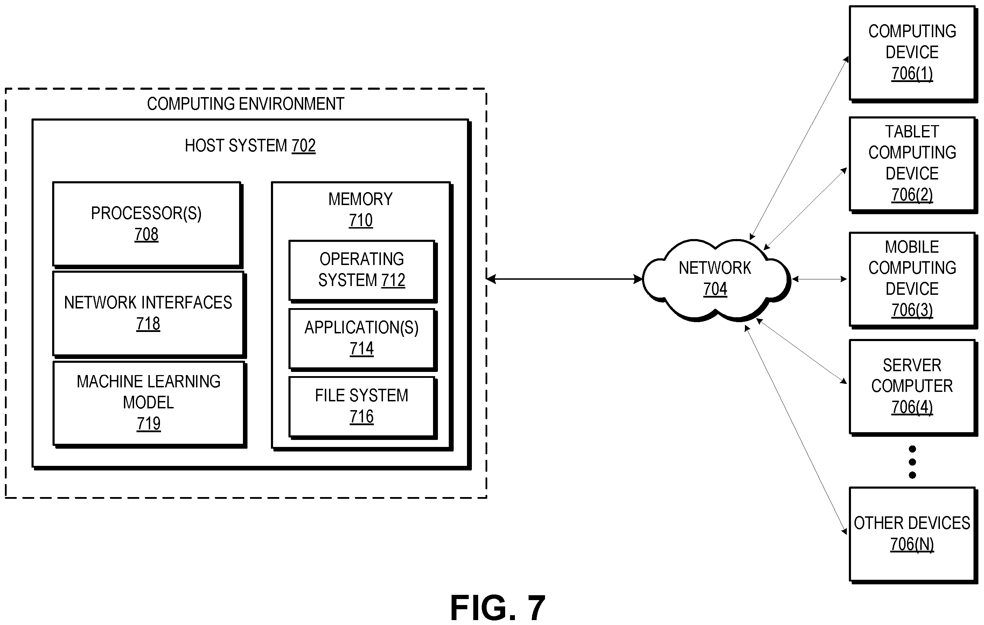

FIG. 7 illustrates an example computing environment capable of executing the techniques and processes described above with respect to FIGS. 1-6. In various examples, the computing environment comprises a host system 702. In various examples, the host system 702 operates on, in communication with, or as part of a network 704.

The network 704 can be or can include various access networks. For example, one or more client devices 706(1)...706(N) can communicate with the host system 702 via the network 704 and/or other connections. The host system 702 and/or client devices can include, but are not limited to, any one of a variety of devices, including portable devices or stationary devices such as a server computer, a smart phone, a mobile phone, a personal digital assistant (PDA), an electronic book device, a laptop computer, a desktop computer, a tablet computer, a portable computer, a gaming console, a personal media player device, or any other electronic device.

According to various implementations, the functionality of the host system 702 can be provided by one or more servers that are executing as part of, or in communication with, the network 704. A server can host various services, virtual machines, portals, and/or other resources. For example, a can host or provide access to one or more portals, Web sites, and/or other information.

The host system 702 can include processor(s) 708 memory 710. The memory 710 can comprise an operating system 712, application(s) 714, and/or a file system 716. Moreover, the memory 710 can comprise the storage unit(s) 82 described above with respect to FIGS. 1-5.

The processor(s) 708 can be a single processing unit or a number of units, each of which could include multiple different processing units. The processor(s) can include a microprocessor, a microcomputer, a microcontroller, a digital signal processor, a central processing unit (CPU), a graphics processing unit (GPU), a security processor etc. Alternatively, or in addition, some or all of the techniques described herein can be performed, at least in part, by one or more hardware logic components. For example, and without limitation, illustrative types of hardware logic components that can be used include a Field-Programmable Gate Array (FPGA), an Application-Specific Integrated Circuit (ASIC), an Application-Specific Standard Products (ASSP), a state machine, a Complex Programmable Logic Device (CPLD), other logic circuitry, a system on chip (SoC), and/or any other devices that perform operations based on instructions. Among other capabilities, the processor(s) may be configured to fetch and execute computer-readable instructions stored in the memory 710.

The memory 710 can include one or a combination of computer-readable media. As used herein, "computer-readable media" includes computer storage media and communication media.

Computer storage media includes volatile and non-volatile, removable and non-removable media implemented in any method or technology for storage of information, such as computer-readable instructions, data structures, program modules, or other data. Computer storage media includes, but is not limited to, phase change memory (PCM), static random-access memory (SRAM), dynamic random-access memory (DRAM), other types of random-access memory (RAM), read-only memory (ROM), electrically erasable programmable ROM (EEPROM), flash memory or other memory technology, compact disk ROM (CD-ROM), digital versatile disks (DVD) or other optical storage, magnetic cassettes, magnetic tape, magnetic disk storage or other magnetic storage devices, or any other medium that can be used to store information for access by a computing device.

In contrast, communication media includes computer-readable instructions, data structures, program modules, or other data in a modulated data signal, such as a carrier wave. As defined herein, computer storage media does not include communication media.

The host system 702 can communicate over the network 704 via network interfaces 718. The network interfaces 718 can include various types of network hardware and software for supporting communications between two or more devices. The host system 702 may also include machine learning model 719.

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

The disclosure presented herein also encompasses the subject matter set forth in the following clauses:
Clause 1: A method of generating and rendering images, on a first device having a two-dimensional display, the images of users of a communications system, the method comprising:
   receiving, by the first device from a second device, expression data indicative of a current facial expression of a user of the second device, the second device having a three-dimensional display;
   inputting the expression data to a generative model trained on an enrollment image indicative of a baseline image of the user's face;
   receiving, from the generative model, facial image information usable to render a two-dimensional image of the current facial expression on the first device; and
   sending the facial image information to the first device for rendering the two-dimensional image of the current facial expression on the two-dimensional display in context of an on-going session of the communications system.
Clause 2: The method of clause 1, wherein the expression data is received from one of a webcam or a VR headset.
Clause 3: The method of any of clauses 1-2, wherein the facial image information excludes a visor worn by the user.
Clause 4: The method of any of clauses 1-3, further comprising:
   receiving pose data indicative of a current hand and body pose of the user of the communication system;
   inputting the pose data to the generative model, wherein the generative model is further trained on an additional enrollment image indicative of a baseline image of the user's hand and body;
   receiving, from the generative model, hand and body image information usable to render a two-dimensional image of the current hand and body pose; and
   sending the hand and body image information to the first device for rendering of the two-dimensional image of the current hand and body pose.
Clause 5: The method of any of clauses 1-4, wherein the enrollment image comprises an image of the user not wearing a visor.
Clause 6: The method of any of clauses 1-5, wherein the visor worn by the user is excluded by implementing a mask comprising pixels indicating which portions to exclude.
Clause 7: The method of clauses 1-6, wherein an inverse of the mask is removed from the image before being added to the mask.
Clause 8: The method of any of clauses 1-7, further comprising using a trained rendering module to generate a composited output.
Clause 9: The method of any of clauses 1-8, further comprising running a segmentation model to generate a mask of the visor in each frame.
Clause 10: The method of any of clauses 1-9, further comprising adding audio data to the expression data, wherein the rendering of the two-dimensional image includes generating facial expressions based on the audio data.
Clause 11: A computing system for generating and rendering images of users of a communications system on a two-dimensional display device, the computing system comprising:
   one or more processors; and
   a computer-readable storage medium having computer-executable instructions stored thereupon which, when executed by the processor, cause the computing system to perform operations comprising:
   receiving, from an image capture device, image data of a user of the communications system, the image data including a visor worn by the user;
   generating expression data indicative of a current facial expression of the user;
   inputting the expression data to a generative model trained on an enrollment image indicative of a baseline image of the user's face;
   receiving, from the generative model, facial image information usable to render a two-dimensional image of the current facial expression on the two-dimensional display device, the facial image information generated based on the enrollment image, wherein the two-dimensional image excludes the visor worn by the user, the excluded portion of the two-dimensional image replaced with the facial image information; and
   sending the facial image information to a computing node for rendering of the two-dimensional image of the current facial expression in context of an on-going session of the communications system.
Clause 12: The computing system of clause 11, wherein the expression data is received from one of a webcam or a VR headset.
Clause 13: The computing system of any of clauses 9 and 10, wherein the facial image information excludes a visor worn by the user.
Clause 14: The computing system of any clauses 11-13, further comprising computer-executable instructions stored thereupon which, when executed by the processor, cause the computing system to perform operations comprising:
   receiving pose data indicative of a current hand/body pose of the user of the communication system;
   inputting the pose data to the generative model, wherein the generative model is further trained on an additional enrollment image indicative of a baseline image of the user's hand/body;
   receiving, from the generative model, hand/body image information usable to render a two-dimensional image of the current hand/body pose; and
   sending the hand/body image information to the computing node for rendering of the two-dimensional image of the current hand/body pose.
Clause 15: The computing system of any clauses 11-14, wherein the enrollment image comprises an image of the user not wearing a visor.
Clause 16: The computing system of any clauses 11-15, wherein the visor worn by the user is excluded by implementing a mask comprising pixels indicating which portions to exclude.
Clause 17: The computing system of any clauses 11-16, wherein an inverse of the mask is removed from the image before being added to the mask.
Clause 18: The computing system of any clauses 11-17, further comprising computer-executable instructions stored thereupon which, when executed by the processor, cause the computing system to perform operations comprising using a trained rendering module to generate a composited output.
Clause 19: The computing system of any clauses 11-18, further comprising computer-executable instructions stored thereupon which, when executed by the processor, cause the computing system to perform operations comprising running a segmentation model to generate a mask of the visor in each frame.
Clause 20: A computer-readable storage medium having computer-executable instructions stored thereupon which, when executed by a processor of a computing system, cause the computing system to perform operations comprising:
   receiving, from an image capture device, image data of a user of a communications system, the image data including a visor worn by the user;
   generating expression data indicative of a current facial expression of the user;
   inputting the expression data to a generative model trained on an enrollment image indicative of a baseline image of the user's face;
   receiving, from the generative model, facial image information usable to render a two-dimensional image of the current facial expression on a two-dimensional display device, the facial image information generated based on the enrollment image, wherein the two-dimensional image excludes the visor worn by the user, the excluded portion of the two-dimensional image replaced with the facial image information; and
   sending the facial image information to a computing node for rendering of the two-dimensional image of the current facial expression in context of an on-going session of the communications system.

## Claims

1. A method of generating and rendering images, on a first device having a two-dimensional display, the images of users of a communications system, the method comprising:
receiving, by the first device from a second device, expression data (201) indicative of a current facial expression of a user of the second device, the second device having a three-dimensional display;
inputting the expression data to a generative model (207) trained on an enrollment image (257) indicative of a baseline image of the user's face;
receiving, from the generative model, facial image information usable to render a two-dimensional image of the current facial expression on the first device; and
sending the facial image information to the first device for rendering the two-dimensional image of the current facial expression on the two-dimensional display in context of an on-going session of the communications system.

2. The method of claim 1, wherein the expression data is received from one of a webcam or a VR headset.

3. The method of any of claims 1-2, wherein the facial image information excludes a visor worn by the user.

4. The method of any of claims 1-3, further comprising:
receiving pose data indicative of a current hand and body pose of the user of the communication system;
inputting the pose data to the generative model, wherein the generative model is further trained on an additional enrollment image indicative of a baseline image of the user's hand and body;
receiving, from the generative model, hand and body image information usable to render a two-dimensional image of the current hand and body pose; and
sending the hand and body image information to the first device for rendering of the two-dimensional image of the current hand and body pose.

5. The method of any of claims 1-4, wherein the enrollment image comprises an image of the user not wearing a visor.

6. The method of any of claims 1-5, wherein the visor worn by the user is excluded by implementing a mask comprising pixels indicating which portions to exclude.

7. The method of any of claims 1-6, wherein an inverse of the mask is removed from the image before being added to the mask.

8. The method of any of claims 1-7, further comprising using a trained rendering module to generate a composited output.

9. The method of any of claim 1-8, further comprising running a segmentation model to generate a mask of the visor in each frame.

10. The method of any of claims 1-9, further comprising adding audio data to the expression data, wherein the rendering of the two-dimensional image includes generating facial expressions based on the audio data.

11. A computing system for generating and rendering images of users of a communications system on a two-dimensional display device, the computing system comprising:
one or more processors; and
a computer-readable storage medium having computer-executable instructions stored thereupon which, when executed by the processor, cause the computing system to perform operations comprising:
receiving, from an image capture device, image data of a user of the communications system, the image data including a visor (121, 122) worn by the user;
generating expression data (201) indicative of a current facial expression of the user;
inputting the expression data to a generative model (207) trained on an enrollment image indicative of a baseline image of the user's face;
receiving, from the generative model, facial image information usable to render a two-dimensional image of the current facial expression on the two-dimensional display device, the facial image information generated based on the enrollment image, wherein the two-dimensional image excludes the visor worn by the user, the excluded portion of the two-dimensional image replaced with the facial image information; and
sending the facial image information to a computing node for rendering of the two-dimensional image of the current facial expression in context of an on-going session of the communications system.

12. The computing system of claim 11, wherein the expression data is received from one of a webcam or a VR headset.

13. The computing system of any of claims 9 and 10, wherein the facial image information excludes a visor worn by the user.

14. The computing system of any of claims 11-13, further comprising computer-executable instructions stored thereupon which, when executed by the processor, cause the computing system to perform operations comprising:
receiving pose data (234) indicative of a current hand/body pose of the user of the communication system;
inputting the pose data to the generative model, wherein the generative model is further trained on an additional enrollment image (257) indicative of a baseline image of the user's hand/body;
receiving, from the generative model, hand/body image information usable to render a two-dimensional image of the current hand/body pose; and
sending the hand/body image information to the computing node for rendering of the two-dimensional image of the current hand/body pose.

15. A computer-readable storage medium having computer-executable instructions stored thereupon which, when executed by a processor of a computing system, cause the computing system to perform operations comprising:
receiving, from an image capture device, image data of a user of a communications system, the image data including a visor (121, 122) worn by the user;
generating expression data (252) indicative of a current facial expression of the user;
inputting the expression data to a generative model (207) trained on an enrollment image (257) indicative of a baseline image of the user's face;
receiving, from the generative model, facial image information (204) usable to render a two-dimensional image of the current facial expression on a two-dimensional display device, the facial image information generated based on the enrollment image, wherein the two-dimensional image excludes the visor worn by the user, the excluded portion of the two-dimensional image replaced with the facial image information; and
sending the facial image information to a computing node for rendering of the two-dimensional image of the current facial expression in context of an on-going session of the communications system.
